Europäisches Patentamt

European Patent Office

Office européen des brevets

(19)

(11) Veröffentlichungsnummer: **0 084 591**
**A1**

## (12) EUROPÄISCHE PATENTANMELDUNG

(21) Anmeldenummer: 82107501.7

(22) Anmeldetag: 18.08.82

(51) Int. Cl.³: **F 16 D 69/04**

(30) Priorität: **22.01.82 DE 8201404 U**

(71) Anmelder: **Jurid Werke GmbH, Glinder Weg 1, D-2057 Reinbek (DE)**

(43) Veröffentlichungstag der Anmeldung: **03.08.83 Patentblatt 83/31**

(72) Erfinder: **Kelch, Adolf, Asbrook, D-2056 Glinde (DE)**

(84) Benannte Vertragsstaaten: **AT BE CH DE FR GB IT LI NL SE**

(74) Vertreter: **Patentanwälte Dipl.-Ing. J. Richter Dipl.-Ing. F. Werdermann, Neuer Wall 10, D-2000 Hamburg 36 (DE)**

(54) **Reibbelag, insbesondere für Scheiben- und Eisenbahnbremsklötze, Trommelbremsbacken, Kupplungsscheiben od.dgl., und Verfahren zu seiner Herstellung.**

(57) Zur kraft- und formschlüssigen Verbindung des Reibwerkstoffblockes (20) auf dem Trägerblech (10) ist dieses auf der den Reibwerkstoffblock tragenden Seite (11) mit einer Struktur-Oberfläche aus kraft- und formschlußbildenden, aus dem Trägerblechmaterial geformten Formelementen (40) versehen, die Hinterschneidungen, Einziehungen od.dgl. (41) aufweisen, während auf der Struktur-Oberfläche (30) die aufgepreßte Reibmaterialmischung in Blockform unter Ausfüllung der Hinterschneidungen, Einziehungen od.dgl. der einzelnen Formelemente befestigt ist.

EP 0 084 591 A1

0084591

<u>Reibbelag, insbesondere für Scheiben- und Eisenbahn-</u>
<u>bremsklötze, Trommelbremsbacken, Kupplungsscheiben</u>
<u>od.dgl., und Verfahren zu seiner Herstellung.</u>

Die Erfindung betrifft einen Reibbelag, insbesondere für Scheiben- und Eisenbahnbremsklötze, Trommelbremsbacken, Kupplungsscheiben od.dgl., bestehend aus einem auf einem Trägerblech befestigten Block aus einer gepreßten Reibmaterialmischung, und ein Verfahren zu seiner Herstellung.

Zur Herstellung von Bremsbelägen ist es bekannt, Blöcke aus einer gepreßten Reibmaterialmischung auf einem Trägerblech vermittels Klebefolien oder Kleber zu befestigen. Durch die Verwendung von organischen Klebstoffen sind jedoch Grenzen in Bezug auf deren Temperaturbeständigkeit gesetzt. Über diese Grenzen hinausgehende Temperaturen führen zu einer Aufweichung bzw. Zerstörung der Klebeverbindung, wodurch die Haftung des Reibwerkstoffes auf den Trägerblechen vermindert wird und es somit zu einem Ablösen des Reibwerkstoffblockes von dem Trägerblech kommen kann.

Die Erfindung löst die Aufgabe, einen Reibbelag mit einer kraft- und formschlüssigen Verbindung zwischen dem Reibwerkstoffblock und dem Trägerblech bei gleichzeitiger Erhöhung der Temperaturbeständigkeit der Haftschicht zu schaffen.

Zur Lösung dieser Aufgabe wird ein Reibbelag gemäß der eingangs beschriebenen Art vorgeschlagen, der erfindungsgemäß in der Weise ausgebildet ist, daß das Trägerblech auf der den Reibwerkstoffblock tragenden Seite eine Struktur-Oberfläche aus kraft- und formschlußbildenden, aus dem Trägerblechmaterial geformten Formelementen aufweist, die mit Hinterschneidungen, Einziehungen od.dgl. versehen sind, und daß auf der Struktur-Oberfläche die aufgepreßte Reibmaterialmischung in Blockform unter Ausfüllung der Hinterschneidungen, Einziehungen od.dgl. der einzelnen Formelemente befestigt ist.

Eine besonders vorteilhafte Ausführungsform der Erfindung sieht eine Ausgestaltung vor, nach der der Reibbelag in der Weise ausgebildet ist, daß das Trägerblech auf der den Reibwerkstoffblock tragenden Seite ein aufgesintertes Bett aus einzelnen, mit dem Reibwerkstoffblock kraft- und formschlußbildenden Formkörpern mit Hinterschneidungen, Einziehungen od.dgl. aufweist, und daß auf dem Formkörperbett die aufgepreßte Reibmaterialmischung in Blockform unter Ausfüllung der Hinterschneidungen, Einziehungen od.dgl. der einzelnen Formkörper befestigt ist, wobei vorteilhafterweise die einzelnen Formkörper des auf das Trägerblech aufgesinterten Formkörperbettes aus einzelnen, einlagig nebeneinander aufgereihten Kügelchen oder anderen geometrischen Körpern aus Bronze, Messing, Metallpulvergranulaten oder anderen geeigneten Werkstoffen bestehen

Eine weitere Lösung der Aufgabe sieht ein Verfahren zur Herstellung eines Reibbelages vor,bei dem auf einem Trägerblech ein Block aus gepreßter Reibmaterialmischung haftend ist, und das darin besteht, daß auf die den Reibwerkstoff tragende Fläche des Trägerbleches ein Bett aus einer Schicht aus nebeneinanderliegenden Kügelchen aus Bronze, Messing, Metallpulvergranulaten oder anderen geeigneten Werkstoffen aufgesintert und hierauf die pulverförmige, granulatförmige, schütt- oder rieselfähige oder vorverdichtete Reibmaterialmischung unter Zuhilfenahme eines

0084591

formgebenden Elementes aufgeschüttet und gepreßt wird, wobei die Preßmasse in die von den Kügelchen gebildeten Zwischenräume und Hinterschneidungen zur Ausbildung einer kraft- und formschlüssigen Verbindung zwischen dem Reibwerkstoff und den Kügelchen fließen.

Durch die Ausbildung einer Haftschicht aus einer auf dem Trägerblech aufgesinterten Schicht aus Formkörpern, beispielsweise Kügelchen, wird eine hohe Haftung zwischen der auf das Formkörperbett aufgepreßten Reibmaterialmischung und dem Trägerblech erreicht, da die Reibmaterialmischung auf das auf das Trägerblech aufgesinterte Formkörperbett aufgegeben und derart gepreßt wird, daß die Reibmaterialmischung in die von den einzelnen Formkörpern bzw. Kügelchen gebildeten Zwischenräume, Hinterschneidungen u.dgl. zur Ausbildung einer kraft- und formschlüssigen Verbindung fließt. Dadurch, daß die aufgepreßte Reibmaterialmischung die kugelförmigen Formkörper umgreift, wird eine kraft- und formschlüssige Verbindung zwischen den einzelnen Formkörpern des auf das Trägerblech aufgesinterten Formkörperbettes erreicht, so daß die so erhaltene Haftung zwischen dem Reibwerkstoff und dem Trägerblech eine hohe Temperaturbeständigkeit aufweist. Neben der Verwendung eines aufgesinterten Formkörperbettes auf das Trägerblech wird eine gleich gute Haftung der aufgepreßten Reibmaterialmischung auch dann erreicht, wenn das Trägerblech auf der den Reibwerkstoffblock tragenden Seite eine Struktur-Oberfläche aus kraft- und formschlußbildenden, aus dem Trägerblechmaterial geformten Formelementen aufweist, so daß aufgrund der auch hier ausgebildeten Hinterschneidungen, Einziehungen od.dgl. die aufgepreßte Reibmaterialmischung während des Preßvorganges in diese Hinterschneidungen und Einziehungen bzw. Zwischenräume zwischen den einzelnen Formelementen bzw.

Formkörpern einfließen und diese allseitig umschließen kann, so daß eine sehr gute Haftung zwischen dem hergestellten Reibwerkstoffblock und dem Trägerblech erzielt wird.

Besonders vorteilhaft ist die Verwendung von Kügelchen als Haftvermittler, da die Kugel als idealer geometrischer Körper keine Sollbruchstelle aufweist, jedoch auch andere geometrische Formen von kugelförmigen Körpern können zur Anwendung gelangen.

Vorteilhafte Weiterbildungen der Erfindung sind in den Unteransprüchen beschrieben.

Im folgenden wird der Gegenstand der Erfindung in den Zeichnungen erläutert. Es zeigt

Fig. 1 in einer Ansicht von oben ein Trägerblech mit darauf befestigtem Reibwerkstoffblock,

Fig. 2 einen senkrechten Schnitt gemäß Linie II-II in Fig. 1 mit einer Abschnittsvergrößerung,

Fig. 3 eine Draufsicht auf ein Trägerblech mit einem aufgesinterten Bett aus einzelnen kugelförmigen Formkörpern,

Fig. 4 einen senkrechten Schnitt gemäß Linie IV-IV in Fig. 3 und

Fig. 5 in einem senkrechten Schnitt eine vergrößerte Darstellung eines auf die Trägerplatte aufgesinterten kugelförmigen Formkörpers.

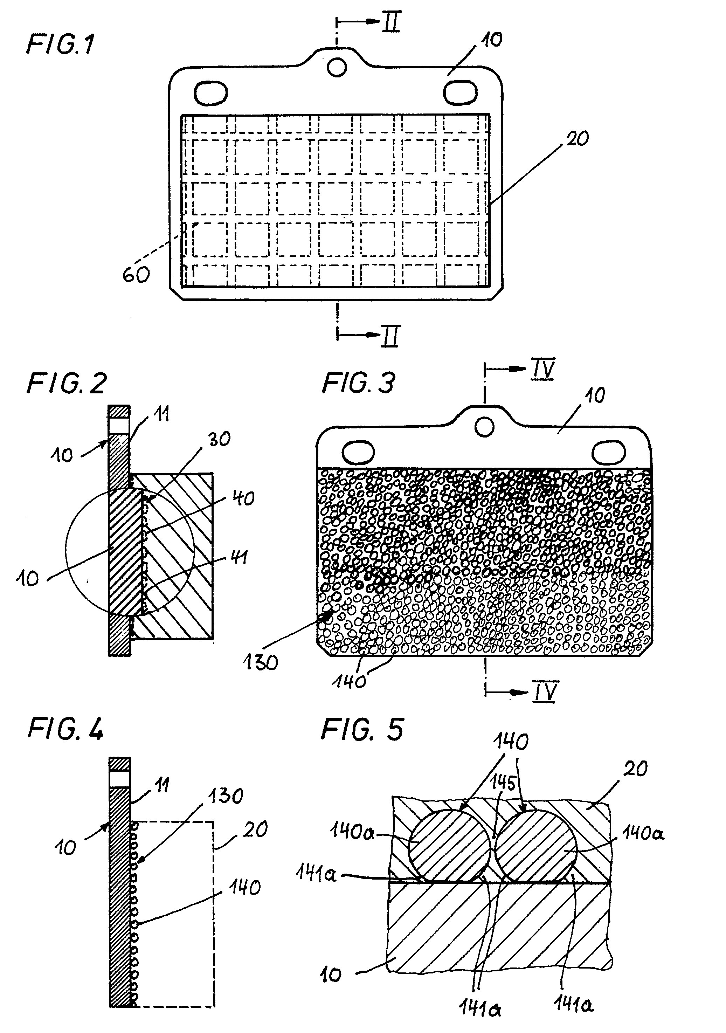

In den Fig. 1 und 3 ist mit 10 ein in an sich bekannter Weise ausgebildetes Trägerblech aus metallischen Werk-

0084591

stoffen bezeichnet, auf dem ein Block 20 aus einer gepreßten Reibmaterialmischung angeordnet ist.

Bei der Ausführungsform gemäß Fig. 1 und 2 weist das Trägerblech 10 auf der den Reibwerkstoffblock 20 tragenden Seite 11 eine strukturell ausgebildete Oberfläche 30 aus Formelementen 40 auf, die aus dem Trägerblechmaterial derart geformt sind, daß jedes einzelne Formelement Hinterschneidungen, Einziehungen od.dgl. 41 aufweist, wie dies aus der Abschnittsvergrößerung in Fig. 2 ersichtlich ist.

Die Reibmaterialmischung wird unter Zuhilfenahme eines entsprechenden Formelementes auf das mit der Strukturoberfläche 30 versehene Trägerblech 10 derart aufgepreßt, daß während des Preßvorganges die Reibmaterialmischung in die Zwischenräume zwischen den einzelnen Formelementen 40 und in diejenigen Räume einfließt, die von den Hinterschneidungen, Einziehungen od.dgl. 41 gebildet sind. Auf diese Weise erfolgt vermittels der Formelemente 40 eine Veränderung des aufgepreßten und eine Blockform bildenden Reibwerkstoffes mit dem Trägerblech 10.

Bei der in Fig. 3 und 4 gezeigten Ausführungsform ist auf die den Reibwerkstoffblock 20 tragende Seite 11 des Trägerbleches 10 ein Bett 130 aus einer Vielzahl von kleinen Formkörpern 140 aufgesintert, wobei das Aufsintern vermittels an sich bekannter Verfahren erfolgt. Diese Formkörper bestehen aus Bronze, Messing, Metallpulvergranulaten oder anderen geeigneten Werkstoffen. Vorteilhafterweise weisen die Formkörper 140 eine kugelförmige Gestalt auf, wobei jedoch auch andere geometrische Körperformen Verwendung finden können, jedoch ist es wesentlich, daß nur solche Formkörper zur Anwendung gelangen, die im Haftbereich zum Trägerblech 10 Hinterschneidungen, Einziehungen od.dgl. 141 bilden, worauf nachstehend noch näher eingegangen wird.

Dieses aufgesinterte Formkörperbett 130 besteht aus einer Schicht dicht nebeneinanderliegender kleiner Kügelchen 140a. Wird ein mit einem derartigen Formkörperbett 130 versehenes Trägerblech 10 mit dem Reibwerkstoff versehen, so erfolgt auch hier das Auftragen durch Aufpressen der Reibmaterialmischung in der Weise, daß durch den Preßdruck der Reibwerkstoff in die Zwischenräume 145a zwischen den einzelnen Kügelchen 140a und in die Einziehungen bzw. Hinterschneidungen 141a einfließt, die im Bereich der auf das Trägerblech 10 aufgesinterten Kügelchen 140a ausgebildet sind (Fig.5). Dadurch, daß der Reibwerkstoff in diese Zwischenräume, Ausnehmungen, Hinterschneidungen und Einziehungen eingepreßt wird, erfolgt eine innige form- und kraftschlüssige Verbindung des Reibwerkstoffes mit dem Trägerblech 10, auf dem durch Aufsinterung das Formkörperbett 130 fest haftend angeordnet ist.

Die Erfindung ist nicht beschränkt auf die vorangehend beschriebenen und in der Zeichnung dargestellten Ausführungsformen. Abweichungen in der Formgebung der Formelemente bzw. Formkörper liegen ebenso im Rahmen der Erfindung wie andersartig ausgestaltete Trägerbleche. Die erfindungsgemäße Verbindungsausgestaltung zwischen dem Reibwerkstoff und einem Trägerblech ist in gleich gutem Maße erhältlich bei die Trägerbleche vollflächig bedeckenden Reibwerkstoffen und auch bei inselförmig aufgetragenen Reibwerkstoffen.

Anstelle einer pulverförmigen Reibmaterialmischung können auch granulatförmige, schütt- oder rieselfähige und/oder vorverdichtete Reibmaterialmischungen verwendet werden.

Als mit dem Reibwerkstoffblock kraft- und formschlußbildendes Element kann nach einer weiteren Ausführungsform der Erfindung auf dem Trägerblech 10 ein Drahtgitter 60 angeordnet sein, das auf dem Tragblech 10 mit Schweiß- oder Lötverbindungen gehalten ist, wobei auch andere herkömmliche Verbindungsmittel zur Anwendung gelangen können. Die Stäbe des Drahtgitters können einen kreisförmigen, elliptischen oder dreieckförmigen Querschnitt aufweisen, wobei im letzteren Falle die Stäbe mittels ihrer Dreiecksspitze auf dem Trägerblech gehalten sind. Auch andere geometrische Querschnittsformen für die Stäbe des Drahtgitters 60 können verwendet werden, jedoch sollen die verwendeten Querschnittsformen derart sein, daß Einziehungen, Hinterschneidungen od.dgl. ausgebildet werden (Fig.1).

Patentansprüche

1. Reibbelag, insbesondere für Scheiben- und Eisenbahnbremsklötze, Trommelbremsbacken, Kupplungsscheiben od.dgl., bestehend aus einem auf einem Trägerblech befestigten Block aus einer gepreßten Reibmaterialmischung, dadurch gekennzeichnet, daß das Trägerblech (10) auf der den Reibwerkstoffblock (20) tragenden Seite (11) eine Struktur-Oberfläche (30) aus kraft- und formschlußbildenden, aus dem Trägerblechmaterial geformten Formelementen (40) aufweist, die mit Hinterschneidungen, Einziehungen od.dgl. (41) versehen sind, und daß auf der Struktur-Oberfläche (30) die aufgepreßte Reibmaterialmischung in Blockform (20) unter Ausfüllung der Hinterschneidungen, Einziehungen od.dgl. (41) der einzelnen Formelemente (40) befestigt ist.

2. Reibbelag, insbesondere für Scheiben- und Eisenbahnbremsklötze, Trommelbremsbacken, Kupplungsscheiben od.dgl., bestehend aus einem auf einem Trägerblech befestigten Block aus einer gepreßten Reibmaterialmischung, dadurch gekennzeichnet, daß das Trägerblech (10) auf der den Reibwerkstoffblock (20) tragenden Seite (11) ein aufgesintertes Bett (130) aus einzelnen, mit dem Reibwerkstoffblock (20) kraft- und formschlußbildenden Formkörpern (140) mit Hinterschneidungen, Einziehungen od.dgl. (141) aufweist, und daß auf dem Formkörperbett (130) die aufgepreßte Reibmaterialmischung in Blockform (20) unter Ausfüllung der Hinterschneidungen, Einziehungen od.dgl. (141) der einzelnen Formkörper (140) befestigt ist.

3. Reibbelag nach Anspruch 2, dadurch gekennzeichnet, daß die einzelnen Formkörper (140) des auf das Trägerblech (10) aufgesinterten Formkörperbettes (130) aus einzelnen, einlagig nebeneinander aufgereihten Kügelchen (140a) oder anderen geometrischen Körpern aus
Bronze, Messing, Metallpulvergranulaten oder anderen geeigneten Werkstoffen bestehen.

4. Reibbelag nach Anspruch 2, dadurch gekennzeichnet,
daß auf dem Trägerblech (10) ein mit dem Reibwerkstoffblock (20) kraft- und formschlüssig verbundenes Drahtgitter (60) mittels einer Schweiß-, Löt- oder andersartigen Verbindung angeordnet ist.

5. Reibbelag nach Anspruch 4, dadurch gekennzeichnet,
daß das Drahtgitter (60) aus Stäben mit einem kreisförmigen, elliptischen, dreieckförmigen Querschnitt
oder einer anderen geometrischen Querschnittsform unter
Ausbildung von Hinterschneidungen, Einziehungen od.
dgl. besteht.

6. Verfahren zur Herstellung eines Reibbelages, insbesondere
für Scheiben- und Eisenbahnbremsklötze, Trommelbremsbacken, Kupplungsscheiben od.dgl., bei dem auf einem Trägerblech ein Block aus gepreßter Reibmaterialmischung
haftend gehalten ist, dadurch gekennzeichnet, daß auf
die den Reibwerkstoff tragende Fläche des Trägerblechs ein Bett aus einer Schicht aus nebeneinanderliegenden Kügelchen aus Bronze, Messing, Metallpulvergranulaten oder anderen geeigneten Werkstoffen aufgesintert und hierauf die pulverförmige, granulatförmige, schütt- oder rieselfähige oder vorverdichtete
Reibmaterialmischung unter Zuhilfenahme eines formgebenden Elementes aufgeschüttet und gepreßt wird, wobei die Preßmasse in die von den Kügelchen gebildeten
Zwischenräume und Hinterschneidungen zur Ausbildung
einer kraft- und formschlüssigen Verbindung zwischen
dem Reibwerkstoff und den Kügelchen fließen.

7. Verwendung eines Trägerbleches mit einem einseitig
aufgesinterten Bett aus einer Lage von nebeneinander-

0084591

liegenden Kügelchen aus Bronze, Messing, Metallpulvergranulat oder anderen geeigneten Werkstoffen und einer auf dieses Kugelbett aufgepreßten, pulverförmigen, granulatförmigen, schütt- oder rieselfähigen oder vorverdichteten Reibmaterialmischung zwecks Herstellung einer kraft- und formschlüssigen Verbindung zwischen Reibwerkstoff und Trägerblech für Reibbeläge, insbesondere für Scheiben- und Eisenbahnbremsklötze, Trommelbremsbacken, Kupplungsscheiben od.dgl.

FIG.1

FIG.2

FIG.3

FIG.4

FIG.5

**Europäisches Patentamt**

**EUROPÄISCHER RECHERCHENBERICHT**

008459.1

Nummer der Anmeldung

EP 82 10 7501

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-3 139 671  (HERRON)  * Spalte 2, Zeile 57 - Spalte 3, Zeile 39; Figuren 1-7 * | 1-3,6, 7 | F 16 D 69/04 |
| | --- | | |
| X | FR-A-1 392 681  (FERODO)  * Seite 3, linke Spalte, Zeilen 51-55; Figur 4 * | 1,4 | |
| | --- | | |
| A | FR-A-1 550 754  (BERG. STAHL) | | |
| | --- | | |
| A | GB-A- 821 293  (AMERICAN BRAKE) | | |
| | --- | | |
| A | FR-A-1 221 382  (BENDIX) | | |
| | --- | | RECHERCHIERTE SACHGEBIETE (Int. Cl. 3) |
| A | DE-B-2 054 335  (HECK) | | F 16 D 69/04 F 16 D 69/02 F 16 D 65/02 F 16 D 55/22 F 16 D 69/02 B 22 F 7/04 |
| | ----- | | |

Der vorliegende Recherchenbericht wurde für alle Patentansprüche erstellt.

| Recherchenort DEN HAAG | Abschlußdatum der Recherche 22-03-1983 | Prüfer HARTEVELD C.D.H. |
|---|---|---|